# EUROPEAN PATENT SPECIFICATION

(11) **EP 4 405 811 B1**
(45) Date of publication and mention of the grant of the patent: **16.09.2026**
(21) Application number: 21791569.3
(22) Date of filing: 24.09.2021
(51) Int. Cl.: G06F 9/445, G06F 9/451, G05B 15/02, H04L 12/28, H04N 7/18

(54) **HIERARCHICAL MOBILE APPLICATION LAUNCH**
START EINER HIERARCHISCHEN MOBILEN ANWENDUNG
LANCEMENT HIÉRARCHIQUE D'APPLICATION MOBILE

(43) Date of publication of application: 31.07.2024
(73) Proprietor: Google LLC, Mountain View, CA 94043 (US)
(72) Inventor: BILLIG, Noel, Mountain View, California 94043 (US); BEEN, Rachel, Mountain View, California 94043 (US); BANSAL, Sameer, Mountain View, California 94043 (US); ALVAREZ, Michelle, Mountain View, California 94043 (US); HARRIS, Clarke, Mountain View, California 94043 (US); CONOVER, Christopher, Mountain View, California 94043 (US)
(74) Representative: Maikowski & Ninnemann Patentanwälte Partnerschaft mbB
(86) International application number: PCT/US2021/051981
(87) International publication number: WO 2023/048720

(56) References cited:
- US-A1- 2016 364 114
- US-A1- 2021 132 559

## Description

### BACKGROUND

Mobile applications, such as those used to control smart home devices, tend to be designed to handle many sorts of configurations that a user may have. Therefore, many options of a mobile application may not be useful to a particular user. The presence of these options, from the standpoint of the user, may complicate and reduce the efficiency of the user when interacting with the mobile application. However, from the standpoint of the provider, elimination of these options would reduce the functionality of the mobile application for other users. Patent application US 2021/0132 559 A1 describes a method for efficient control and/or linking of smart network-connected devices. Patent application US 2016/0364 114 A1 refers to systems and methods for smart home automation using a multi-function status and entry-point icon.

### SUMMARY

Various embodiments are described related to a method for performing a hierarchical mobile application launch. In some embodiments, a method for performing a hierarchical mobile application launch is described. The method comprises receiving, by one or more processors of a mobile device, one or more requests to register one or more smart home devices in association with a user account. The method comprises mapping, by the one or more processors, the one or more smart home devices to the user account based on the one or more received requests. The method comprises receiving, by an application executed by the mobile device, a request to launch. The application executed by the mobile device is mapped to the user account. The method comprises analyzing, by the one or more processors, the one or more smart home devices registered to the user account and a user interface hierarchy. The method comprises, based on analyzing the one or more smart home devices registered to the user account and the user interface hierarchy, selecting, by the one or more processors, an initial launch user interface from a plurality of initial launch user interfaces to be presented by the application in response to the receiving the request to launch, wherein an initial launch user interface is the first user interface with which the user can interact that is presented upon launch of the application; and wherein: the user interface hierarchy at least comprises a lowest-tier user interface, a middle-tier user interface and a top-tier user interface, wherein a lowest-tier user interface comprises a device-level user interface, a middle-tier user interface comprises a category-level user interface and a top-tier user interface comprises a home-level user interface; and selecting, by the one or more processors, the initial launch user interface comprises selecting the initial launch user interface which (a) captures all registered smart home devices and, (b) if more than one initial launch user interface fulfils requirement (a), among those, corresponds to the lowermost tier. The method comprises outputting, by the application executed by the mobile device, the selected initial launch user interface.

Embodiments of such a method may include one or more of the following features: the one or more smart home devices may comprise at least two smart home devices. The at least two smart home devices may be of different categories of smart home devices. The initial launch user interface selected from the plurality of initial launch user interfaces may be based on the at least two smart home devices being of different categories of smart home devices based on the user interface hierarchy. A status card element may be presented for each category of the different categories of smart home devices as part of the initial launch user interface. For each status card element, a current status of the corresponding category of smart home devices may be presented. The at least two smart home devices may be of a same category of smart home device. The initial launch user interface selected from the plurality of initial launch user interfaces may be a middle-tier initial launch user interface based on the at least two smart home devices all being of the same category of smart home device. The at least two smart home devices may be of a different type of smart home device, but are of a same category of smart home device. The initial launch user interface selected from the plurality of initial launch user interfaces may be a middle-tier initial launch user interface based on the at least two smart home devices being of the same category of smart home device but different types of smart home device. The one or more smart home devices may comprise only a single smart home device. The initial launch user interface selected from the plurality of initial launch user interfaces may be a lowest-tier initial launch user interface based on the single smart home device and the user interface hierarchy. The single smart home device may be a video camera and the selected launch interface may be a device-level video feed that may be captured using the video camera. The one or more smart home devices may be smart home devices selected from the group consisting of a video camera, a smart thermostat, a wireless network router, a smart doorbell, a smart hazard detector, a smart home assistant device, smart speaker, smart display and smart air purifier. The one or more smart home devices are one or more smart home devices installed with a single structure.

In some embodiments, a mobile electronic device is described. The device includes an electronic display. The device includes a wireless network interface. The device includes one or more processors. The device includes a memory communicatively coupled with the electronic display, the wireless network interface and the one or more processors. The memory being readable by the one or more processors and having stored therein processor-readable instructions which, when executed by the one or more processors, cause the one or more processors to receive one or more requests to register one or more smart home devices in association with a user account. The one or more processors map the one or more smart home devices to the user account based on receiving the one or more requests. The one or more processors receive a request to launch an application that is mapped to the user account. The one or more processors analyze the one or more smart home devices registered to the user account and a user interface hierarchy. The one or more processors, based on analyzing the one or more smart home devices registered to the user account and the user interface hierarchy, select an initial launch user interface from a plurality of initial launch user interfaces to be presented by the application in response to the receiving the request to launch, wherein a launch user interface is the first user interface with which the user can interact that is presented upon launch of the application; and wherein: the user interface hierarchy at least comprises a lowest-tier user interface, a middle-tier user interface and a top-tier user interface, wherein a lowest-tier user interface comprises a device-level user interface, a middle-tier user interface comprises a category-level user interface and a top-tier user interface comprises a home-level user interface; and to select the initial launch user interface comprises to select the initial launch user interface which (a) captures all registered smart home devices and, (b) if more than one initial launch user interface fulfils requirement (a), among those, corresponds to the lowermost tier. The one or processors output, to the electronic display, the selected initial launch user interface.

Embodiments of such a device may include one or more of the following features: the processor-readable instructions are loaded in the memory of the mobile electronic device as the application downloaded from an application store via the wireless network interface. The one or more smart home devices may comprise at least two smart home devices. The at least two smart home devices may be of different categories of smart home devices. The initial launch user interface selected from the plurality of initial launch user interfaces may be based on the at least two smart home devices being of different categories of smart home devices based on the user interface hierarchy. A status card element may be presented for each category of the different categories of smart home devices as part of the initial launch user interface. For each status card element, a current status of the corresponding category of smart home devices may be presented. The at least two smart home devices may be of a same category of smart home device. The initial launch user interface selected from the plurality of initial launch user interfaces may be a middle-tier initial launch user interface based on the at least two smart home devices all being of the same category of smart home device. The at least two smart home devices may be of a different type of smart home device, but are of a same category of smart home device. The initial launch user interface selected from the plurality of initial launch user interfaces may be a middle-tier initial launch user interface based on the at least two smart home devices being of the same category of smart home device but different types of smart home device. The one or more smart home devices may comprise a single smart home device. The initial launch user interface selected from the plurality of initial launch user interfaces may be a lowest-tier initial launch user interface based on the single smart home device and the user interface hierarchy. The single smart home device may be a video camera and the selected launch interface may be a device-level video feed that may be captured using the video camera.

In some embodiments, a non-transitory processor-readable medium is described. The medium comprises processor-readable instructions configured to cause one or more processors to receive one or more requests to register one or more smart home devices in association with a user account. The one or more processors map the one or more smart home devices to the user account based on receiving the one or more requests. The one or more processors receive a request to launch an application that is mapped to the user account. The one or more processors analyze the one or more smart home devices registered to the user account and a user interface hierarchy by the application. The one or more processors, based on analyzing the one or more smart home devices registered to the user account and the user interface hierarchy, select, by the application, an initial launch user interface from a plurality of initial launch user interfaces to be presented by the application in response to the receiving the request to launch, wherein an initial launch user interface is the first user interface with which the user can interact that is presented upon launch of the application; and wherein: the user interface hierarchy at least comprises a lowest-tier user interface, a middle-tier user interface and a top-tier user interface, wherein a lowest-tier user interface comprises a device-level user interface, a middle-tier user interface comprises a category-level user interface and a top-tier user interface comprises a home-level user interface; and to select, by the application, the initial launch user interface comprises to select the initial launch user interface which (a) captures all registered smart home devices and, (b) if more than one initial launch user interface fulfils requirement (a), among those, corresponds to the lowermost tier. The one or more processors output, by the application, the selected initial launch user interface for display.

### BRIEF DESCRIPTION OF THE DRAWINGS

A further understanding of the nature and advantages of various embodiments may be realized by reference to the following figures. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
**FIG. 1** illustrates an embodiment of smart home environment in which various smart home devices are present.
**FIG. 2A** illustrates an embodiment of a hierarchy of smart-home device interfaces.
**FIG. 2B** illustrates another embodiment of a hierarchy of smart-home device interfaces.
**FIG. 3** illustrates an embodiment of a system that performs a hierarchical mobile application launch.
**FIG. 4A** illustrates an embodiment of a device-specific interface.
**FIG. 4B** illustrates an embodiment of a category-specific interface.
**FIG. 4C** illustrates an embodiment of a home-level interface.
**FIG. 4D** illustrates an embodiment of another home-level interface.
**FIG. 5** illustrates an embodiment of a method for performing a hierarchical mobile application launch.

### DETAILED DESCRIPTION

Users of smart home devices can vary widely in the number and type of devices they install within their homes. A user may buy a single smart home device, install it within their home and use it for a time before installing one or more additional smart home devices. A significant number of users may only install a single smart home device, such as a security camera. Other users, however, may install a significant number of a smart home devices, possibly of the same type (e.g., multiple security cameras) or possibly of different types (e.g., a security camera and a smart thermostat). For example, a "power" user of smart home devices may install one or more: smart thermostats, smart hazard detectors, video doorbells, video cameras, smart outlets, and home assistants in their home. Therefore, if multiple smart home devices are installed, they may be of a same category or disparate categories.

An entity that sells various types of smart home devices may desire to have a single unified application that allows a user to interact with whatever smart home devices, which can include smart home devices sold directly by the entity and also third-party compatible devices. A unified application, as detailed herein, can adapt to differing situations based on the particular arrangement that a user has installed within a home. Specifically, when the application is launched, an initial launch interface that is presented to the user can be based on the specific number and types of smart home devices installed in the user's home. For instance, a user with many smart home devices would receive a different launch interface from a user with only two security smart home devices installed within their home, who would also receive a different launch interface from a user who has a single smart home device within their home. Embodiments detailed herein disclose methods and systems for performing hierarchical mobile application launch. Such arrangements can, for example, significantly speed up users' access to features of the application that would be desired by users and reduce user frustration by eliminating the need to navigate through unnecessary interfaces.

While the description herein focuses on smart home devices, it should be understood that the same principles can be applied to other forms of computerized devices that are not necessarily smart home devices. For example, other forms of Internet of Things (IoT) devices, such as distributed sensors, could be managed by an application in a similar manner. Similarly, fleets of autonomous devices (e.g., land-based vehicles, unmanned aerial vehicles) could be managed similarly.

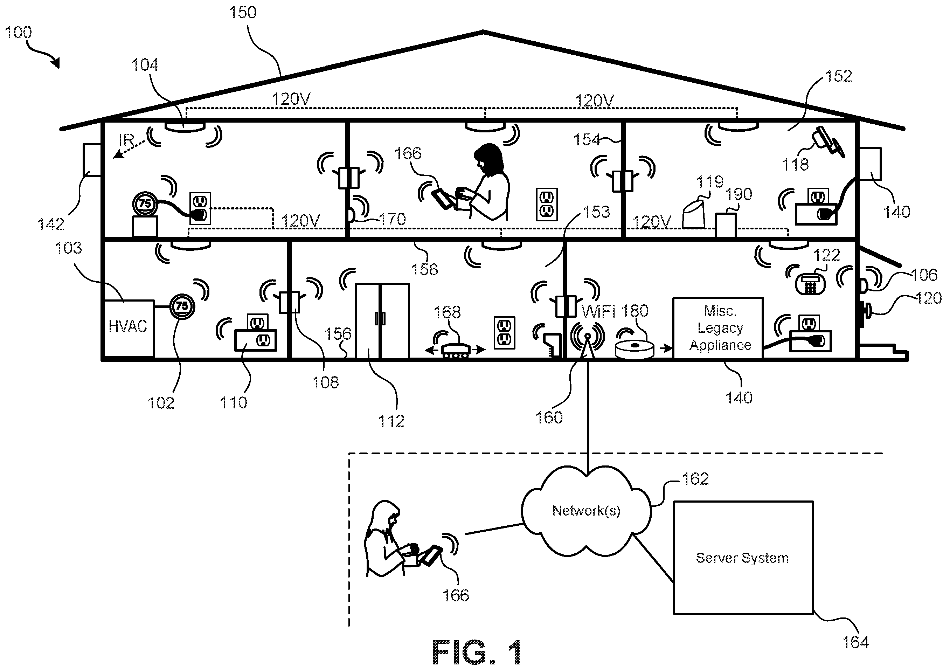

**FIG. 1** illustrates an embodiment of smart home environment 100 in which various smart home devices are present. The smart home environment 100 includes a structure 150 (e.g., a house, daycare, office building, apartment, condominium, garage, or mobile home) with various integrated devices. It will be appreciated that devices may also be integrated into a smart home environment 100 that does not include an entire structure 150, such as an apartment or condominium. Further, the smart home environment 100 may control and/or be coupled to devices outside of the actual structure 150. Indeed, several devices in the smart home environment 100 need not be physically within the structure 150.

It is to be appreciated that "smart home environments" may refer to smart environments for homes such as a single-family house, but the scope of the present teachings is not so limited. The present teachings are also applicable, without limitation, to duplexes, townhomes, multi-unit apartment buildings, hotels, retail stores, office buildings, industrial buildings, and more generally any living space or work space.

It is also to be appreciated that while the terms user, customer, installer, homeowner, occupant, guest, tenant, landlord, repair person, and the like may be used to refer to the person or persons acting in the context of some particular situations described herein, these references do not limit the scope of the present teachings with respect to the person or persons who are performing such actions. Thus, for example, the terms user, customer, purchaser, installer, subscriber, and homeowner may often refer to the same person in the case of a single-family residential dwelling, because the head of the household is often the person who makes the purchasing decision, buys the unit, and installs and configures the unit, and is also one of the users of the unit. However, in other scenarios, such as a landlord-tenant environment, the customer may be the landlord with respect to purchasing the unit, the installer may be a local apartment supervisor, a first user may be the tenant, and a second user may again be the landlord with respect to remote control functionality. Importantly, while the identity of the person performing the action may be germane to a particular advantage provided by one or more of the implementations, such identity should not be construed in the descriptions that follow as necessarily limiting the scope of the present teachings to those particular individuals having those particular identities.

The depicted structure 150 includes a plurality of rooms 152, separated at least partly from each other via walls 154. The walls 154 may include interior walls or exterior walls. Each room may further include a floor 156 and a ceiling 158. Devices may be mounted on, integrated with and/or supported by a wall 154, floor 156 or ceiling 158.

In some implementations, the integrated devices of the smart home environment 100 include intelligent, multi-sensing, network-connected devices that integrate seamlessly with each other in a smart home network and/or with a central server or a cloud-computing system to provide a variety of useful smart home functions. The smart home environment 100 may include one or more intelligent, multi-sensing, network-connected thermostats 102 (hereinafter referred to as "smart thermostats 102"), one or more intelligent, network-connected, multi-sensing hazard detection units 104 (hereinafter referred to as "smart hazard detectors 104"), one or more intelligent, multi-sensing, network-connected entryway interface devices 106 and 120 and one or more intelligent, multi-sensing, smart alarm systems 122 (hereinafter referred to as "smart alarm systems 122"). In some implementations, the one or more smart thermostats 102 detect ambient climate characteristics (e.g., temperature and/or humidity) and control an HVAC system 103 accordingly. For example, a respective smart thermostat 102 includes an ambient temperature sensor.

A smart hazard detector may detect smoke, carbon monoxide, and/or some other hazard present in the environment. The one or more smart hazard detectors 104 may include thermal radiation sensors directed at respective heat sources (e.g., a stove, oven, other appliances, a fireplace, etc.). For example, a smart hazard detector 104 in a kitchen 153 includes a thermal radiation sensor directed at a network-connected appliance 112. A thermal radiation sensor may determine the temperature of the respective heat source (or a portion thereof) at which it is directed and may provide corresponding black-body radiation data as output.

The smart doorbell 106 and/or the smart door lock 120 may detect a person's approach to or departure from a location (e.g., an outer door), control doorbell/door locking functionality (e.g., receive user inputs from a portable electronic device 166 to actuate the bolt of the smart door lock 120), announce a person's approach or departure via audio or visual means, and/or control settings on a security system (e.g., to activate or deactivate the security system when occupants go and come). In some implementations, the smart doorbell 106 includes some or all of the components and features of the camera 118-1. In some implementations, the smart doorbell 106 includes a camera 118-1, and, therefore, is also called "doorbell camera 106" in this document. Cameras 118-1 and/or 118-2 may function as a streaming video camera and the streaming audio device detailed in relation to various embodiments herein. Cameras 118 may be mounted in a location, such as indoors and to a wall or can be moveable and placed on a surface, such as illustrated with camera 118-2. Various embodiments of cameras 118 may be installed indoors or outdoors.

The smart alarm system 122 may detect the presence of an individual within close proximity (e.g., using built-in IR sensors), sound an alarm (e.g., through a built-in speaker, or by sending commands to one or more external speakers), and send notifications to entities or users within/outside of the smart home environment 100. In some implementations, the smart alarm system 122 also includes one or more input devices or sensors (e.g., keypad, biometric scanner, NFC transceiver, microphone) for verifying the identity of a user, and one or more output devices (e.g., display, speaker). In some implementations, the smart alarm system 122 may also be set to an armed mode, such that detection of a trigger condition or event causes the alarm to be sounded unless a disarming action is performed.

In some implementations, the smart home environment 100 includes one or more intelligent, multi-sensing, network-connected wall switches 108 (hereinafter referred to as "smart wall switches 108"), along with one or more intelligent, multi-sensing, network-connected smart wall plugs 110. The smart wall switches 108 may detect ambient lighting conditions, detect room-occupancy states, and control a power and/or dim state of one or more lights. In some instances, smart wall switches 108 may also control a power state or speed of a fan, such as a ceiling fan. The smart wall plugs 110 may detect occupancy of a room or enclosure and control the supply of power to one or more wall plugs (e.g., such that power is not supplied to the plug if nobody is at home).

In some implementations, the smart home environment 100 of FIG. 1 includes a plurality of intelligent, multi-sensing, network-connected appliances 112 (hereinafter referred to as "smart appliances 112"), such as refrigerators, stoves, ovens, televisions, washers, dryers, lights, stereos, intercom systems, wall clock, garage-door openers, floor fans, ceiling fans, wall air conditioners, pool heaters, irrigation systems, security systems, space heaters, window AC units, motorized duct vents, and so forth. In some implementations, when plugged in, an appliance may announce itself to the smart home network, such as by indicating what type of appliance it is, and it may automatically integrate with the controls of the smart home. Such communication by the appliance to the smart home may be facilitated by either a wired or wireless communication protocol. The smart home may also include a variety of non-communicating legacy appliances 140, such as old conventional washer/dryers, refrigerators, and the like, which may be controlled by smart wall plugs 110. The smart home environment 100 may further include a variety of partially communicating legacy appliances 142, such as infrared ("IR") controlled wall air conditioners or other IR-controlled devices, which may be controlled by IR signals provided by the smart hazard detectors 104 or the smart wall switches 108.

In some implementations, the smart home environment 100 includes one or more network-connected cameras 118 that are configured to provide video monitoring and security in the smart home environment 100. The cameras 118 may be used to determine occupancy of the structure 150 and/or particular rooms 152 in the structure 150, and thus may act as occupancy sensors. For example, video captured by the cameras 118 may be processed to identify the presence of an occupant in the structure 150 (e.g., in a particular room 152). Specific individuals may be identified based, for example, on their appearance (e.g., height, face) and/or movement (e.g., their walk/gait). Cameras 118 may additionally include one or more sensors (e.g., IR sensors, motion detectors), input devices (e.g., a microphone for capturing audio), and output devices (e.g., a speaker for outputting audio). In some implementations, the cameras 118 are each configured to operate in a day mode and in a low-light mode (e.g., a night mode). In some implementations, the cameras 118 each include one or more IR illuminators for providing illumination while the camera is operating in the low-light mode. In some implementations, the cameras 118 include one or more outdoor cameras. In some implementations, the outdoor cameras include additional features and/or components such as weatherproofing and/or solar ray compensation.

The smart home environment 100 may additionally or alternatively include one or more other occupancy sensors (e.g., the smart doorbell 106, smart door locks 120, touch screens, IR sensors, microphones, ambient light sensors, motion detectors, smart nightlights 170, etc.). In some implementations, the smart home environment 100 includes radio-frequency identification (RFID) readers (e.g., in each room 152 or a portion thereof) that determine occupancy based on RFID tags located on or embedded in occupants. For example, RFID readers may be integrated into the smart hazard detectors 104.

Smart home assistant 119 may have one or more microphones that, when turned on, continuously listen to an ambient environment. Smart home assistant 119 may be able to respond to verbal queries posed by a user, possibly preceded by a triggering phrase. Smart home assistant 119 may output an audio stream, can stream video to server system 164, if a camera is integrated as part of the device, and/or can output video if a display is incorporated as part of the device.

By virtue of network connectivity, one or more of the smart-home devices of FIG. 1 may further allow a user to interact with the device even if the user is not proximate to the device. For example, a user may communicate with a device using a computer (e.g., a desktop computer, laptop computer, or tablet) or other portable computerized electronic device 166 (e.g., a mobile phone, such as a smart phone, gaming device). A webpage or application may be configured to receive communications from the user and control the device based on the communications and/or to present information about the device's operation to the user. For example, the user may view a current set point temperature for a device (e.g., smart thermostat 102) and adjust it using a computer. The user may be in the structure during this remote communication or outside the structure.

As discussed above, users may control smart devices in the smart home environment 100 using a network-connected computer or portable electronic device 166. In some examples, some or all of the occupants (e.g., individuals who live in the home) may register their portable electronic device 166 with a user account maintained by server system 164. Such registration may be made at server system 164 to authenticate the occupant and/or the device as being associated with the home and to give permission to the occupant to use the device to control the smart devices in the home that have also been registered with the user account. An occupant may use their registered portable electronic device 166 to remotely control the smart devices of the home, such as when the occupant is at work or on vacation. The occupant may also use their registered device to control the smart devices when the occupant is actually located inside the home, such as when the occupant is sitting on a couch inside the home. It should be appreciated that instead of or in addition to registering portable electronic devices 166, the smart home environment 100 may make inferences about which individuals live in the home and are therefore occupants and which portable electronic devices 166 are associated with those individuals. As such, the smart home environment may "learn" who is an occupant and permit the portable electronic devices 166 associated with those individuals to control the smart devices of the home.

In some implementations, in addition to containing processing and sensing capabilities, smart thermostat 102, smart hazard detector 104, smart doorbell 106, smart wall switch 108, smart wall plug 110, network-connected appliances 112, camera 118, smart home assistant 119, smart door lock 120, and/or smart alarm system 122 (collectively referred to as "the smart-home devices") are capable of data communications and information sharing with other smart devices, a central server or cloud-computing system, and/or other devices that are network-connected. Data communications may be carried out using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, MiWi, etc.) and/or any of a variety of custom or standard wired protocols (e.g., Ethernet, HomePlug, etc.), or any other suitable communication protocol, including communication protocols not yet developed as of the filing date of this document. At least some smart home devices may use a relatively low-power mesh networking protocol to communicate with each other.

In some implementations, some smart devices serve as wireless or wired repeaters. A smart home device that has access to line power can serve as a bridge between a relatively lower power communication protocol (e.g., a mesh networking protocol) and a relatively higher power communication protocol (e.g., WiFi). Such an arrangement allows for battery powered devices to communicate with a remote server. Some smart devices may communicate with network interface 160, which allows for communication with network(s). Networks 162 can include the Internet and, possibly, one or more wireless or wired local area networks, such as within a user's home. Through the Internet, the smart devices may communicate with a cloud-based server system 164. Server system 164 may be associated with a manufacturer, support entity, or service provider associated with the smart device(s). In some implementations, a user is able to contact customer support using a smart device itself rather than needing to use other communication means, such as a telephone or Internet-connected computer. In some implementations, software updates are automatically sent from server system 164 to smart devices (e.g., when available, when purchased, or at routine intervals).

In some implementations, the network interface 160 includes a conventional network device (e.g., a router), and the smart home environment 100 of FIG. 1 includes a hub device 180 that is communicatively coupled to the network(s) 162 directly or via the network interface 160. The hub device 180 is further communicatively coupled to one or more of the above intelligent, multi-sensing, network-connected devices (e.g., smart devices of the smart home environment 100). Each of these smart devices optionally communicates with the hub device 180 using one or more radio communication networks available at least in the smart home environment 100 (e.g., ZigBee^{™}, Z-Wave^{™}, Insteon^{™}, Bluetooth^{™}, Wi-Fi^{™} and other radio communication networks). In some implementations, the hub device 180 and devices coupled with/to the hub device can be controlled and/or interacted with via an application running on a smart phone, household controller, laptop, tablet computer, game console or similar electronic device. In some implementations, a user of such controller application can view the status of the hub device or coupled smart devices, configure the hub device to interoperate with smart devices newly introduced to the home network, commission new smart devices, and adjust or view settings of connected smart devices, etc. In some implementations the hub device extends capabilities of low capability smart devices to match capabilities of the highly capable smart devices of the same type, integrates functionality of multiple different device types - even across different communication protocols - and is configured to streamline adding of new devices and commissioning of the hub device. In some implementations, hub device 180 further includes a local storage device for storing data related to, or output by, smart devices of smart home environment 100. In some implementations, the data includes one or more of: video data output by a camera device, metadata output by a smart device, settings information for a smart device, usage logs for a smart device, and the like.

In some implementations, smart home environment 100 includes a local storage device 190 for storing data related to, or output by, smart devices of smart home environment 100. In some implementations, the data includes one or more of: video data output by a camera device (e.g., cameras 118 or smart doorbell 106), metadata output by a smart device, settings information for a smart device, usage logs for a smart device, and the like. In some implementations, local storage device 190 is communicatively coupled to one or more smart devices via a smart home network. In some implementations, local storage device 190 is selectively coupled to one or more smart devices via a wired and/or wireless communication network. In some implementations, local storage device 190 is used to store video data when external network conditions are poor. For example, local storage device 190 is used when an encoding bitrate of cameras 118 exceeds the available bandwidth of the external network (e.g., network(s) 162). In some implementations, local storage device 190 temporarily stores video data from one or more cameras (e.g., cameras 118) prior to transferring the video data to a cloud-based server system (e.g., server system 164).

Further included and illustrated in the exemplary smart home environment 100 of FIG. 1 are service robots 168, each configured to carry out, in an autonomous manner, any of a variety of household tasks. For some embodiments, the service robots 168 can be respectively configured to perform floor sweeping, floor washing, etc. In some embodiments, a service robot may follow a person from room to room and position itself such that the person can be monitored while in the room. The service robot may stop in a location within the room where it will likely be out of the way, but still has a relatively clear field-of-view of the room. In some embodiments, a smart air purifier may be present.

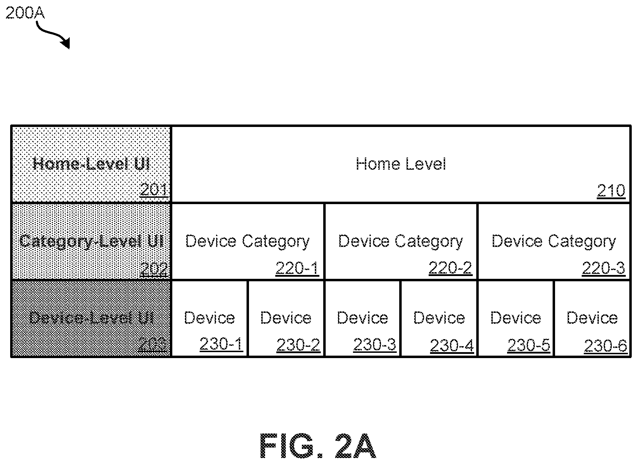

An application installed on a computerized device, such as portable electronic device 166, can be used to interact with one or more smart home devices, such as those presented in FIG. 1. Such smart home devices may be manufactured or distributed by a same entity or may be part of a larger, compatible ecosystem of various third-party entities. **FIG. 2A** illustrates an embodiment of a hierarchy 200A of smart-home device interfaces.

Hierarchy 200A can be used to determine a launch user interface (UI) that is presented to a user when the application is first launched. In some embodiments, hierarchy 200A has three levels. "Launch" refers to when a user activates an application for use. For example, on a smartphone, launch would typically involve a user touching a corresponding icon on a home screen of the smartphone. Alternatively, a user may speak a command to an electronic device, such as "launch smart home application." A "launch user interface" refers to the first UI that is presented with which the user can interact. For example, a splash screen that is presented while the application loads would not be a launch UI. Rather, a launch UI would be the first UI with which the user can interact with one or more smart home devices.

In some embodiments, hierarchy 200A can involve three levels. A lowest level may be at the device level. As illustrated, hierarchy 200A includes a device-level UI 203. If only a single smart home device is mapped to a user account, when the application mapped to the user account is launched, device-level UI 203 may be presented. Device-level UI 203 can correspond to a single particular type of device. An example of a device-level UI is illustrated in FIG. 2A. As examples, six devices 230 are illustrated as part of hierarchy 200A. These devices may be any of the types of devices illustrated in relation to FIG. 1. If a user has only a single one of any of device 230 mapped to their user account, upon application launch, the user may be presented with device-level UI 203 that corresponds to the device. Device-level UI 203 can differ based on the type of device installed. For example, device-level UI 203 could be a video feed if the user only has a video camera mapped to their user account or device-level UI 203 could be a media control interface if the user only has a smart home assistant mapped to their user account.

Category-level UI 202 may be presented as the launch UI if a user has multiple devices mapped to their user account, but all of the devices are of a same category. Hierarchy 200A can include all possible types of smart home devices being divided up into various predefined categories. Devices in the same category share at least some aspects in common. As an example, five device categories may be present. Such device categories can include: security/safety; media; climate; connectivity; and lighting. Security/safety can involve any device related to maintaining security or safety, such as video cameras, smart door locks, hazard detectors (e.g., smoke detectors, carbon monoxide detectors), smart door bells, smart garage openers, smart gate openers, security system components (e.g., window sensors, door sensors, motion sensors, water sensors, pool sensors), smart alarms, etc. Media can involve any device that is capable of outputting media, such as smart home assistants, smart speakers, smart displays/televisions, and smart home hubs. Climate can involve any device related to controlling or monitoring the climate, such as: thermostats, temperature sensors, smart heaters, smart air conditioners, smart air quality sensors, smart radiators, smart humidifiers, smart fans, smart dehumidifiers, and smart air fresheners. Connectivity can involve any device related to network connectivity, such as: internet routers and network mesh access points. Lighting can include any device related to powering on or off lights, such as: smart light bulbs, smart light switches, or smart outlets.

Various other devices may not fit into a category and may therefore be listed under a highest-level all-device view. In other embodiments, additional or alternate categories, such as a catch-all "other" category, can be made to include some or all of these forms of smart devices. Such smart devices can include: vehicles; personal mobility devices (e.g., electric scooters, electric bicycles) awnings; bathtubs; beds; blenders; blinds; boilers; device chargers; clocks and clock-radios; coffee/tea makers; computers; cooktops; curtains; food dehydrators; dishwashers; doors; dryers; elevators; faucets; water filters; fireplaces; fryers; garden control devices; grills; ventilation hoods; water kettles; locator tags (which can be attached to other devices, such as to keys or smartphones); mailboxes; microphones; microwaves; mops; lawnmowers; multicookers; ovens; pergolas; smartphones; picture displays;; pressure cookers; refrigerators; service robots; scene controllers; showers; shutters; sous vide cookers; sprinkler systems; stylers; toilets; vacuums; valves; ventilators; washing machines; water heaters; and yogurt makers.

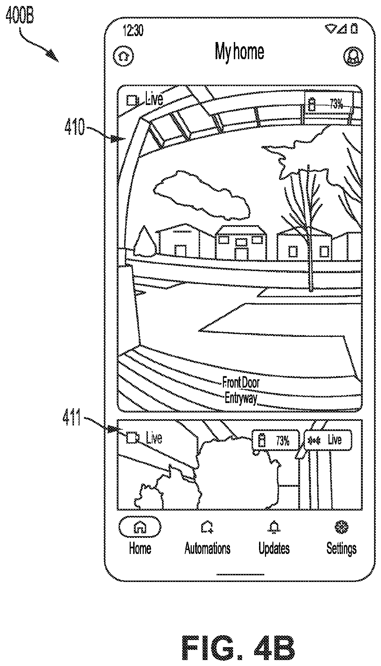

An example of category-level UI 202 is present in FIG. 4B. Category-level UI 202 can differ based on the category of device installed. For example, category-level UI 202 could include multiple video feeds if the user only has video devices mapped to their user account or category-level UI 202 could be a media control interface if the user only has smart home assistants or other various media devices mapped to their user account.

(Smart outlets can be classified into multiple categories based on the device that the smart outlet controls. For instance, if a smart outlet controls a lamp, the smart output can be categorized as part of the lighting category. Categorization can be performed manually by a user or may be performed automatically by server system 164 or application 320 based on the name for the smart outlet provided by the user or a function specified by the user. Such categorizations of other types of devices into a particular device category of device categories 220 is also possible.)

In other embodiments, fewer or greater numbers of device categories 220 may be present. For instance, in some embodiments, a "catch-all" category may be present for smart devices that do not fit into another predefined category. The application or server system can store a definition of each device category or device categories 220 that defines which devices fall into the category. Therefore, for example, if a user installs a smart home assistant, the application or server can properly classify it without user input. In some embodiments, a category may be defined for particular types of devices, such as an air quality / air purifier category, which could include air quality sensors and/or smart air purifiers.

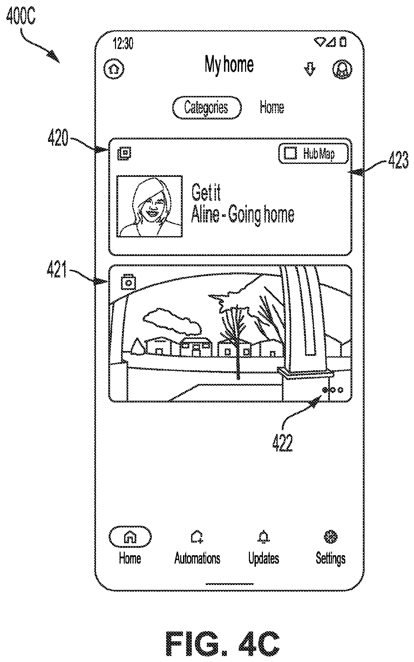

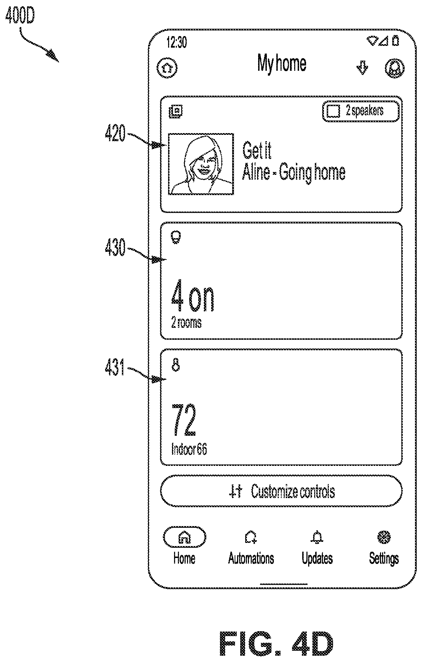

Home-level 210 can represent a highest level of hierarchy 200A. If a user has multiple devices mapped to their user account and the multiple devices fall into different device categories, home-level UI 201 may be presented as the launch UI. Home-level UI 201 may provide a status for each category of which the user has mapped devices. An example of home-level UI 201 is present in FIGS. 4C and 4D. Home-level 210 may vary based on the particular device categories for which a user has a device mapped to their user account. For instance, if a user has device 230-1 and device 230-3 installed in their home, elements for only device categories 220-1 and 220-2 may be presented, with device category 220-3 omitted from home-level UI 201.

As an example of how hierarchy 200A could work, if a user has only device 230-3 installed in their home and mapped to their user account, device-level UI 203 specific to the type of device 230-3 would be presented as the launch UI. If the user has only device 230-3 and device 230-4 (which may be the same type of device, or different types of devices that are part of a same category), category-level UI 202 that corresponds to device category 220-2 would be presented as the launch UI. If the user has devices from multiple categories, such as device 230-2 and device 230-5 mapped to his user account and installed in the home, home-level UI 201 may be presented. In this example, home-level UI 201 can include UI elements corresponding to device categories 220-1 and 220-3, but device category 220-2 would be omitted since no smart device is present in the home that corresponds to device category 220-2.

Hierarchy 200A can be analyzed dynamically, meaning that as the smart home devices within a home and mapped to a user account are added or removed, the launch UI is altered based on the one or more smart home devices. For example, at first a user may only have device 230-1 mapped to their user account and, thus, may receive device-level UI 203 as the launch UI. If the user then maps device 230-6 to their user account, the user may receive home-level UI 201 as their launch UI in the application.

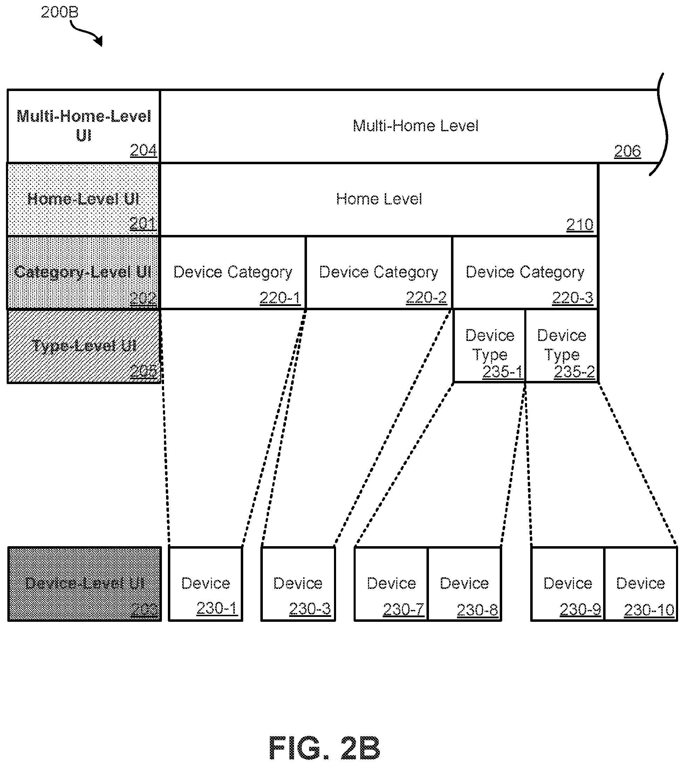

While hierarchy 200A is shown as having three levels, in other embodiments, fewer (i.e., two) or greater (i.e., four or more) may be present. **FIG. 2B** illustrates another embodiment of a hierarchy 200B of smart-home device interfaces. Hierarchy 200B may include five levels. In addition to the levels detailed in relation to hierarchy 200A, device types 235, multi-home-level 206, or both may be present. In this embodiment, if a user has multiple homes mapped to their user account and devices installed at such homes, the launch UI may be multi-home-level UI 204. At this level, the user may select the particular home for which the user desires to interact. In some embodiments, even if multi-home-level 206 is available, a lower level launch UI may be selected based on a location of the device executing the application.

Type-level UI 205 may be used if the user has only multiple devices of a same type installed in their home. For instance, if a user has only two security video cameras (e.g., device type 235-1) installed in their home, the launch UI may be type-level UI 205. If the user were to add another device that has video functionality but is not a dedicated video camera (e.g., a smart doorbell), category-level UI 202 would be presented (assuming a smart doorbell and video cameras are part of the same device category). In the example of hierarchy 200B, type-level UI 205 may only be available for one or more particular device categories (such as how type-level UI 205 is not available for device categories 220-1 and 220-2). In other embodiments, hierarchies may be created that have a subset of the levels detailed in relation to FIGS. 2A and 2B or a greater number of levels

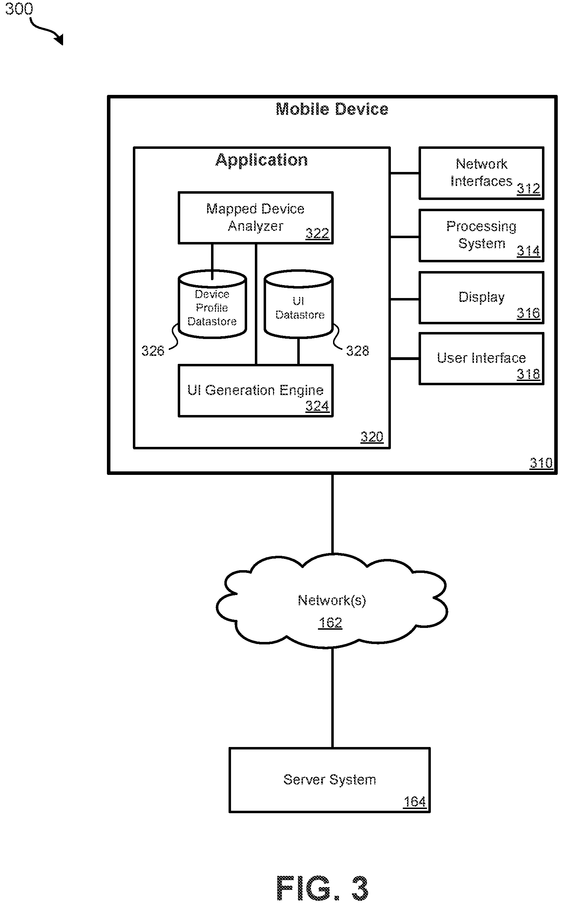

FIG. 3 illustrates an embodiment of a system 300 that performs a hierarchical mobile application launch. System 300 can implement the hierarchies of FIGS. 2A and 2B or variations thereof. System 300 can include: mobile device 310; network 162; and server system 164.

Server system 164 can maintain a user account with which smart home devices and mobile device 310 can be registered. Application 320 can be permitted to only manage/present information related to smart home devices which have been registered with the user account at server system 164 to which application 320 is logged in, such as via a username and password.

Mobile device 310, which can represent an embodiment of portable electronic device 166 (e.g., smartphone, tablet computer, gaming device, etc.), can include: network interface 312; processing system 314; display 316; and user interface 318. Other components can be present, but are not illustrated for the simplicity of FIG. 3. Network interfaces 312 can allow for mobile device 310 to communicate via various wireless networks, such as a cellular network and Wi-Fi network. Processing system 314 may include one or more processors that allow for the execution of software, such as application 320. Display 316 may be incorporated as part of mobile device 310 and may allow for information to be presented by mobile device 310. Display 316 may be a touchscreen that functions as both a display and as user interface 318. User interface 318 may be a keypad, incorporated as part of a touchscreen, voice interface, or some other form of interface with which a user can interact to provide input. Other components of mobile device 310 are not illustrated, such as non-transitory processor readable mediums, which may, for example, be used to store application 320.

Application 320 may be installed on mobile device 310. Application 320 may be downloaded from an application ("app") store by mobile device 310, installed, and executed using processing system 314. In other embodiments, application 320 may come preinstalled on mobile device 310, such as part of an operating system (OS).

Application 320 includes: mapped device analyzer 322; UI generation engine 324; device profile data store 326; and UI data store 328. Each of these components may be implemented as software as part of application 320. In other embodiments, it may be possible that some or all of these components are implemented as part of specialized hardware of mobile device 310. Further, some or all of the functions of the components of application 320, rather than being executed and performed locally by mobile device 310, may be performed remotely by server system 164.

Mapped device analyzer 322 may analyze the particular smart home devices that are matched to the user account presently logged in via application 320. Mapped device analyzer 322 may access device profile data store 326, which indicates the make/model and/or category of the smart home devices that are mapped to the user account presently logged in to application 320. Device profile data store 326 may be stored locally as part of application 320 or may be maintained remotely by server system 164. If maintained remotely, mapped device analyzer 322 may access server system 164 upon launch to obtain a listing of the devices mapped to the user account presently logged in to application 320. Mapped device analyzer 322 can determine the number of smart home devices and/or whether the smart home devices are mapped to different categories. Based on analysis of smart home devices that are mapped to the user account mapped to application 320, mapped device analyzer 322 may select a launch UI from multiple available launch UIs in accordance with a hierarchy, such as those detailed in relation to FIGS. 2A and 2B. The lowest level UI that captures all of the smart home devices of the user account is used, as detailed previously.

In some embodiments, this analysis is performed by mapped device analyzer 322 when application 320 is launched. In other embodiments, this analysis is performed by mapped device analyzer 322 whenever a smart home device has been determined to be added or removed from the user. In still other embodiments, the mapped device analyzer 322 and/or device profile data store 326 may be performed by server system 164, such as whenever a smart home device is added or removed. If the analysis is not performed upon application launch, application 320 may store an indication of the particular launch UI that should be presented upon application launch.

UI generation engine 324 may receive an indication of the particular UI that should be used and generate a launch UI for presentation by display 316. The launch UI presented by display 316 is the first UI with which the user can interact following launch of application 320. Formatting and graphical elements used to create the launch UI may be retrieved from UI data store 328.

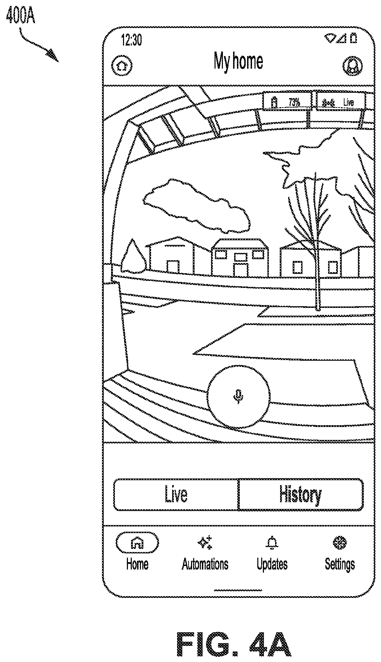

FIGS. 4A-4D represent examples of launch UIs that can be selected based on a hierarchy and the particular smart home devices mapped to a user account. The examples of FIGS. 4A-4D are based on hierarchy 200A of FIG. 2A. **FIG. 4A** illustrates an embodiment of a device-level user interface 400A. Device-level UI 400A would be presented by a mobile device if the user has only a single smart home device linked to the user account to which their mobile device is logged in. For example, following hierarchy 200A, device category 220-1 may be security and device 230-1 may be a video camera. Further, because in the example of FIG. 4A device 230-1 is a video camera, device-level UI 400A is a video interface.

**FIG. 4B** illustrates an embodiment of a category-level user interface 400B. Category-level UI 400B would be presented by a mobile device as the launch UI if the user has multiple smart home devices linked to the user account to which their mobile device is logged in and all of the smart home devices are part of a same category. For example, following hierarchy 200A, device category 220-1 may be security, device 230-1 may be a video camera, and device 230-2 may be a video doorbell. Further, because in the example of FIG. 4B device category 220-1 is security, category-level UI 400B may be a video interface that provides a live stream or video still from each of devices 230-1 and 230-2. Since category-level UI 400B is above the device-level, a separate card element may be presented for each device. Card element 410 can be a live stream or video still from device 230-1 and card element 411 may be a live stream or video still from device 230-2. Additional information, such as location, name, and charge level may be presented for each device on its respective card element. Based on the number of devices which the user has in the category for which the launch UI is presented, scrolling may be necessary to see each card element. Selection of a particular card element can navigate to the device-level interface for the smart home device corresponding to the card element. The ordering of card elements in category-level UI 400B can be manually set by the user.

**FIG. 4C** illustrates an embodiment of a home-level interface. Home-level UI 400C would be presented by a mobile device as the launch UI when the application is launched if the user has at least two smart home devices linked to the user account to which their mobile device is logged in and the smart home devices are part of different categories. For example, following hierarchy 200A, device category 220-1 may be security, device 230-1 may be a video camera, and device 230-2 may be a video doorbell. Additionally, the user has a smart home device that is part of device category 220-2, which may be a media category. Since home-level UI 400C is above the category-level, a separate card element may be presented for each category. Card element 420 can correspond to all devices for the user in the media category (device category 220-2) and card element 421 can correspond to all devices mapped to the user account in the security category (device category 220-1). Since in home-level UI 400C a single card element can correspond to more than one device, not all information for all devices in the category may be presented simultaneously. For instance, card element 421 shows a default video still or live feed from a device in device category 220-1. A user may swipe to select other devices (and their associated video stills or live feeds) as indicated by device selection indicator 422 while remaining in home-level UI 400C. Additional information relevant to the category may be presented on each card element. For instance, on card element 420 for the media category, media-specific information is presented, including a song title, artist name, and album cover for the media currently being output. On card element 420, for the security category, a camera name, camera location, and indication of whether the camera is live may be indicated.

In the example of home-level UI 400C, only a single media device is present and indicated by card element 420, but a similar swipe interface may be used if other media devices were present. Alternatively, device names that are active or outputting media may be indicated, such as indicated by active device indicator 423.

If a user selects (e.g., touches) a card element, the corresponding category UI may be output if multiple devices within the category are mapped to the user account within the home. If only a single device is present in a category and the card element is selected on home-level UI 400C, the device-level UI for the single device may be presented.

In some embodiments, category selector 424 allows for a user to sort by physical room rather than category. In some an arrangement, a card element may be presented for each room in the user's home rather than a card element for each device category. The ordering of card elements in home-level UI 400D can be manually set by the user.

**FIG. 4D** illustrates an embodiment of home-level interface 400D. Home-level UI 400D would be presented by a mobile device as the launch UI when the application is launched if the user has three or more smart home devices linked to the user account to which his or her mobile device is logged in and the smart home devices are part of different categories. For example, following hierarchy 200A, the user has mapped to the user account a smart home device that is part of device category 220-2, which may be a media category. Further, the user has mapped to the user account at least four lighting devices (device category 220-3) and a smart thermostat (a fourth device category not shown in FIG. 2A).

Since home-level UI 400C is above the category-level, a separate card element may be presented for each category. Card element 420 can correspond to all devices for the user in the media category (device category 220-2), card element 430 can correspond to all devices mapped to the user account in a lighting category, and card element 431 can correspond to all devices mapped to the user account in a climate category. For card element 420, an indication is present that the media is being output via two speakers, thus at least two media devices are present in the home and mapped to the user account. Since in home-level UI 400C a single card element can correspond to more than one device, not all information for all devices in the category may be presented simultaneously. For instance, card element 430 shows a number of lighting devices that are on, but does not indicate a number of lighting devices that are off, if any. In this example, no security category is shown. This can mean that devices within the security category are mapped to the user account at the home or that the security category is off-screen and scrolling is required to reach the category.

Additional information relevant to the category may be presented on each card element. For instance, on card element 430 for the lighting category, a written indication of the number of lights turned on and the number of rooms in which those lights are on are indicated. Further, the color yellow is used to indicate the lights being on (as opposed to, for example, gray, if all lights were off). On card element 431, for the climate category, a setpoint temperature and current temperature at the smart thermostat may be indicated. Further, red or orange can indicate heating is active, blue can indicate cooling is active, and gray can indicate an HVAC system is off. Similar to other categories, if multiple climate devices are present, card element 431 can allow swiping side-to-side to view information about other climate-category devices.

The ordering of card elements 420, 430, and 431 can be user selectable, such as to make the user's most-used category appear at the top. Selection of a card element corresponding to a single device can activate the device-specific UI. Selection of a card element corresponding to multiple devices in a same category can activate a category-specific UI. In turn, if a specific device is selected within the category-specific UI, the device specific UI would be presented.

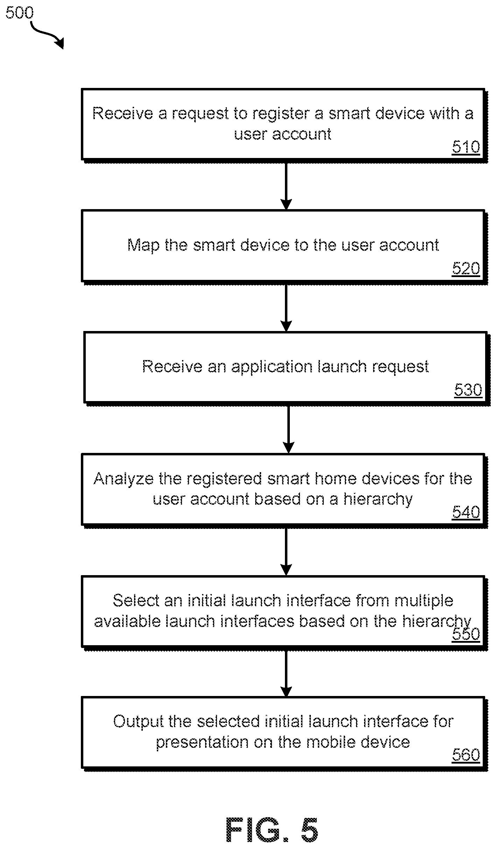

Various methods may be performed using the smart home arrangements, hierarchies, systems, and launch UIs of FIGS. 1-4D. **FIG. 5** illustrates an embodiment of a method 500 for performing a hierarchical mobile application launch. Method 500 may be performed using system 300 of FIG. 3.

At block 510, a request to register a smart device with a user account is received.
This request may be received by the same mobile application through which the hierarchical mobile application launch will be performed at block 560, through the same mobile application registered with the user account but executed on another mobile device, or some other interface, such as a web-based smart device registration interface, accessed either by a mobile device or via a computerized device. Registration causes the smart device to be mapped to the user account such that data obtained from the smart device can be viewed in association with the user account and/or commands can be sent to the smart device in association with the user account at block 520. The remote server system, such as server system 164, maintains a database indicative of the smart home devices mapped to a user account. A similar mapping may be maintained locally at a mobile device that has been mapped to the user account. The smart device registered at block 510 may be sold or made by the same entity that released the mobile application or may be a supported third-party smart home device (that is made or sold by some other entity). Blocks 510 and 520 may be performed repeatedly at the same mobile device or at different devices mapped to the user account to add each smart home device that a user has installed (or is in the process of installing) in his home.

At block 530, a request to launch the mobile application is received by the mobile device for which the application and/or mobile device is mapped to the user account. Block 530 can involve a user touching, issuing a vocal command, or otherwise providing input to the mobile device indicating that the mobile application used to interact with smart home devices is to be launched. In response to block 530 being performed , the mobile application may begin being executed at the mobile device.

At block 540, the registered smart home devices mapped to the user account are analyzed. The analysis can involve using a stored hierarchy, such as hierarchies 200A or 200B, to determine the categories in which each registered smart home device falls, as detailed in relation to FIGS. 2A and 2B. The specifics of a hierarchy, such as the number of levels within the hierarchy, and definitions of categories within the hierarchy, can be predefined by the entity that developed the application and can be updated as part of the application (or, at the remote server system, if the analysis is performed at the remote server system). The hierarchy can be used to classify not only smart home devices sold or manufactured by the same entity that released the application, but also supported third-party smart home devices.

Block 540 may be performed in response to block 530. That is, in response to the application launch request being received, the application executed by the mobile device may perform block 540 or the application may send a message to the remote server system to cause block 540 to be performed. Alternatively, blocks 540 and 550 may be performed prior to block 530 and the results of blocks 540 and 550 may be saved for use in response to block 530 being performed. For example, occasionally, periodically, or in response to block 520 being performed, the mobile application executed by the mobile device may perform blocks 540 and 550 or such blocks may be performed by the remote server system, such as in response to block 520 being performed. The saved result may be stored remotely by the remote server system or transmitted to the mobile device for storage with the application's data. Storage of the result at the mobile device may allow for faster startup of application on launch since less information will need to be retrieved from the server system.

At block 550, the initial launch UI is selected from multiple available launch UIs based on the analysis involving the hierarchy of block 540. The initial launch UI selected is the lowest-level launch UI that captures all of the smart-home devices mapped to the user account. Three possible (but non-limiting) examples based on hierarchy 200A can include: 1) if only a single smart home device is mapped to the user account, a device-level UI may be used as the launch UI; 2) if multiple smart home devices classified within a same category are mapped to the user account, a category-level UI may be used as the launch UI; and 3) if multiple smart home devices classified in multiple categories are mapped to the user account, a home-level UI may be used as the launch UI. Examples of such launch UIs are provided in FIGS. 4A-4C, respectively.

At block 560, the selected initial launch interface from block 550 is output for presentation. Block 560 can be dependent on blocks 530-550 having been performed, though not in that particular order, as previously noted. The selected initial launch interface can allow the user to view data about all of the smart home devices mapped to the user account and, from the initial launch UI, can allow for navigation to other UIs of the application.

Following method 500 being performed, if a smart home device is added or deleted from the user account, the next time method 500 is performed for the mobile device. The initial UI may change based on the modified group of smart home devices now registered with the user account.

It should be noted that the methods, systems, and devices discussed above are intended merely to be examples.

Specific details are given in the description to provide a thorough understanding of the embodiments. However, it will be understood by one of ordinary skill in the art that the embodiments may be practiced without these specific details. For example, well-known, processes, structures, and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the scope of the invention as defined by the claims.

## Claims

1. A method (500) for performing a hierarchical mobile application launch, the method (500) comprising:
receiving (510), by one or more processors (314) of a mobile device (310), one or more requests to register one or more smart home devices (230) in association with a user account;
mapping (520), by the one or more processors (314), the one or more smart home devices (230) to the user account based on the one or more received requests;
receiving (530), by an application (320) executed by the mobile device (310), a request to launch, wherein the application (320) executed by the mobile device (310) is mapped to the user account;
analyzing (540), by the one or more processors (314), the one or more smart home devices (230) registered to the user account and a user interface hierarchy (200A, 200B);
based on analyzing (540) the one or more smart home devices (230) registered to the user account and the user interface hierarchy (200A, 200B), selecting (550), by the one or more processors (314), an initial launch user interface from a plurality of initial launch user interfaces to be presented by the application (320) in response to the receiving (530) the request to launch, wherein an initial launch user interface is the first user interface with which the user can interact that is presented upon launch of the application, and wherein:
the user interface hierarchy at least comprises a lowest-tier user interface, a middle-tier user interface and a top-tier user interface, wherein a lowest-tier user interface comprises a device-level user interface (203), a middle-tier user interface comprises a category-level user interface (202) and a top-tier user interface comprises a home-level user interface (210); and
selecting (550), by the one or more processors (314), the initial launch user interface comprises selecting the initial launch user interface which (a) captures all registered smart home devices and, (b) if more than one initial launch user interface fulfils requirement (a), among those, corresponds to the lowermost tier; and
outputting (560), by the application (320) executed by the mobile device (310), the selected initial launch user interface.

2. The method (500) for performing the hierarchical mobile application launch of claim 1, wherein the one or more smart home devices (230) comprise at least two smart home devices (230).

3. The method (500) for performing the hierarchical mobile application launch of claim 2, wherein:
the at least two smart home devices (230) are of different categories (220) of smart home devices (230); and
the initial launch user interface selected (550) from the plurality of initial launch user interfaces is based on the at least two smart home devices (230) being of different categories (220) of smart home devices (230) based on the user interface hierarchy (200A, 200B); and
wherein a status card element is presented for each category (220) of the different categories (220) of smart home devices (230) as part of the initial launch user interface; and
for each status card element, a current status of the corresponding category (220) of smart home devices (230) is presented.

4. The method (500) for performing the hierarchical mobile application launch of claim 2, wherein:
the at least two smart home devices (230) are of a same category (220) of smart home device (230); and
the initial launch user interface selected from the plurality of initial launch user interfaces is a middle-tier initial launch user interface based on the at least two smart home devices (230) all being of the same category (220) of smart home device (230).

5. The method (500) for performing the hierarchical mobile application launch of claim 2, wherein:
the at least two smart home devices (230) are of a different type (235) of smart home device (230), but are of a same category (220) of smart home device (230); and
the initial launch user interface selected from the plurality of initial launch user interfaces is a middle-tier initial launch user interface based on the at least two smart home devices (230) being of the same category (220) of smart home device (230) but different types (235) of smart home device (230).

6. The method (500) for performing the hierarchical mobile application launch of claim 1, wherein the one or more smart home devices (230) comprise only a single smart home device (230); and
wherein the initial launch user interface selected from the plurality of initial launch user interfaces is a lowest-tier initial launch user interface based on the single smart home device (230) and the user interface hierarchy (200A, 200B); and
wherein the single smart home device (230) is a video camera (118) and the selected launch user interface is a device-level video feed that is captured using the video camera (118).

7. The method (500) for performing the hierarchical mobile application launch of claim 1, wherein the one or more smart home devices (230) are smart home devices (230) selected from the group consisting of:
a video camera (118);
a smart thermostat (102);
a wireless network router (160);
a smart doorbell (106);
a smart hazard detector (104);
a smart home assistant device (119);
smart speaker;
smart display; and
smart air purifier; and/or
wherein the one or more smart home devices (230) are one or more smart home devices (230) installed within a single structure (150), wherein a structure (150) comprises a house, a daycare, an office building, an apartment, a condominium, a garage and/or a mobile home.

8. A mobile electronic device (310), comprising:
an electronic display (316);
a wireless network interface (312); and
one or more processors (314);
a memory communicatively coupled with the electronic display (316), the wireless network interface (312) and the one or more processors (314), the memory being readable by the one or more processors (314) and having stored therein processor-readable instructions which, when executed by the one or more processors (314), cause the one or more processors (314) to:
receive (510) one or more requests to register one or more smart home devices (230) in association with a user account;
map (520) the one or more smart home devices (230) to the user account based on receiving (510) the one or more requests;
receive (530) a request to launch an application (320) that is mapped to the user account;
analyze (540) the one or more smart home devices (230) registered to the user account and a user interface hierarchy (200A, 200B);
based on analyzing (540) the one or more smart home devices (230) registered to the user account and the user interface hierarchy (200A, 200B), select (550) an initial launch user interface from a plurality of initial launch user interfaces to be presented by the application (320) in response to the receiving (530) the request to launch, wherein a launch user interface is the first user interface with which the user can interact that is presented upon launch of the application; and wherein:
the user interface hierarchy at least comprises a lowest-tier user interface, a middle-tier user interface and a top-tier user interface, wherein a lowest-tier user interface comprises a device-level user interface (203), a middle-tier user interface comprises a category-level user interface (202) and a top-tier user interface comprises a home-level user interface (210); and
to select (550) the initial launch user interface comprises to select the initial launch user interface which (a) captures all registered smart home devices and, (b) if more than one initial launch user interface fulfils requirement (a), among those, corresponds to the lowermost tier; and
output (560), to the electronic display (316), the selected initial launch user interface.

9. The mobile electronic device (310) of claim 8, wherein the processor-readable instructions are loaded in the memory of the mobile electronic device (310) as the application (320) is downloaded from an application store via the wireless network interface (312).

10. The mobile electronic device (310) of claim 8, wherein:
the one or more smart home devices (230) comprise at least two smart home devices (230);
the at least two smart home devices (230) are of different categories (220) of smart home devices (230); and
the initial launch user interface selected from the plurality of initial launch user interfaces is based on the at least two smart home devices (230) being of different categories (220) of smart home devices (230) based on the user interface hierarchy (200A, 200B).

11. The mobile electronic device (310) of claim 10, wherein:
a status card element is presented for each category (220) of the different categories (220) of smart home devices (230) as part of the initial launch user interface; and
for each status card element, a current status of the corresponding category (220) of smart home devices (230) is presented.

12. The mobile electronic device (310) of claim 10, wherein:
the at least two smart home devices (230) are of a same category (220) of smart home device (230); and
the initial launch user interface selected from the plurality of initial launch user interfaces is a middle-tier initial launch user interface based on the at least two smart home devices (230) all being of the same category (220) of smart home device (230).

13. The mobile electronic device (310) of claim 10, wherein:
the at least two smart home devices (230) are of a different type (235) of smart home device (230), but are of a same category (220) of smart home device (230); and
the initial launch user interface selected from the plurality of initial launch user interfaces is a middle-tier initial launch user interface based on the at least two smart home devices (230) being of the same category (220) of smart home device (230) but different types (235) of smart home device (230).

14. The mobile electronic device (310) of claim 8, wherein:
the one or more smart home devices (230) comprises a single smart home device (230); and
the initial launch user interface selected from the plurality of initial launch user interfaces is a lowest-tier initial launch user interface based on the single smart home device (230) and the user interface hierarchy (200A, 200B); and
wherein the single smart home device (230) is a video camera (118) and the selected launch user interface is a device-level video feed that is captured using the video camera (118).

15. A non-transitory processor-readable medium, comprising processor-readable instructions configured to cause one or more processors to:
receive (510) one or more requests to register one or more smart home devices (230) in association with a user account;
map (520) the one or more smart home devices (230) to the user account based on receiving (510) the one or more requests;
receive (530) a request to launch an application (320) that is mapped to the user account;
analyze (540) the one or more smart home devices (230) registered to the user account and a user interface hierarchy (200A, 200B) by the application (320);
based on analyzing (540) the one or more smart home devices (230) registered to the user account and the user interface hierarchy (200A, 200B), select (550), by the application (320), an initial launch user interface from a plurality of initial launch user interfaces to be presented by the application (320) in response to the receiving (530) the request to launch, wherein an initial launch user interface is the first user interface with which the user can interact that is presented upon launch of the application; and wherein:
the user interface hierarchy at least comprises a lowest-tier user interface, a middle-tier user interface and a top-tier user interface, wherein a lowest-tier user interface comprises a device-level user interface (203), a middle-tier user interface comprises a category-level user interface (202) and a top-tier user interface comprises a home-level user interface (210); and
to select (550), by the application (320), the initial launch user interface comprises to select the initial launch user interface which (a) captures all registered smart home devices and, (b) if more than one initial launch user interface fulfils requirement (a), among those, corresponds to the lowermost tier; and
output (560), by the application (320), the selected initial launch user interface for display.

## Patentansprüche

1. Verfahren (500) zur Durchführung eines Starts einer hierarchischen mobilen Anwendung, wobei das Verfahren (500) Folgendes umfasst:
Empfangen (510) einer oder mehrerer Anforderungen zum Registrieren einer oder mehrerer Smart-Home-Vorrichtungen (230) in Verbindung mit einem Benutzerkonto durch einen oder mehrere Prozessoren (314) einer mobilen Vorrichtung (310);
Zuordnen (520) der einen oder der mehreren Smart-Home-Vorrichtungen (230) zu dem Benutzerkonto durch den einen oder die mehreren Prozessoren (314) basierend auf der einen oder den mehreren empfangenen Anforderungen;
Empfangen (530) einer Startanforderung durch eine Anwendung (320), die von der mobilen Vorrichtung (310) ausgeführt wird, wobei die Anwendung (320), die von der mobilen Vorrichtung (310) ausgeführt wird, dem Benutzerkonto zugeordnet ist;
Analysieren (540) der einen oder der mehreren Smart-Home-Vorrichtungen (230), die bei dem Benutzerkonto registriert sind, und einer Benutzeroberflächenhierarchie (200A, 200B) durch den einen oder die mehreren Prozessoren (314);
basierend auf dem Analysieren (540) der einen oder der mehreren Smart-Home-Vorrichtungen (230), die bei dem Benutzerkonto registriert sind, und der Benutzeroberflächenhierarchie (200A, 200B) Auswählen (550) einer Erststart-Benutzeroberfläche durch den einen oder die mehreren Prozessoren (314) aus einer Mehrzahl von Erststart-Benutzeroberflächen, die von der Anwendung (320) als Reaktion auf das Empfangen (530) der Startanforderung dargestellt werden, wobei eine Erststart-Benutzeroberfläche die erste Benutzeroberfläche ist, mit der der Benutzer interagieren kann und die beim Start der Anwendung dargestellt wird, und wobei:
die Benutzeroberflächenhierarchie mindestens eine Benutzeroberfläche der untersten Ebene, eine Benutzeroberfläche der mittleren Ebene und eine Benutzeroberfläche der obersten Ebene umfasst, wobei eine Benutzeroberfläche der untersten Ebene eine Benutzeroberfläche auf Vorrichtungsebene (203) umfasst, eine Benutzeroberfläche der mittleren Ebene eine Benutzeroberfläche auf Kategorieebene (202) umfasst und eine Benutzeroberfläche der obersten Ebene eine Benutzeroberfläche auf Startseitenebene (210) umfasst; und
das Auswählen (550) der Erststart-Benutzeroberfläche durch den einen oder die mehreren Prozessoren (314) Auswählen der Erststart-Benutzeroberfläche umfasst, die (a) alle registrierten Smart-Home-Vorrichtungen erfasst und (b), falls mehr als eine Erststart-Benutzeroberfläche die Anforderung (a) erfüllt, darunter, der untersten Ebene entspricht; und
Ausgeben (560) der ausgewählten Erststart-Benutzeroberfläche durch die Anwendung (320), die von der mobilen Vorrichtung (310) ausgeführt wird.

2. Verfahren (500) zur Durchführung des Starts der hierarchischen mobilen Anwendung nach Anspruch 1, wobei die eine oder die mehreren Smart-Home-Vorrichtungen (230) mindestens zwei Smart-Home-Vorrichtungen (230) umfassen.

3. Verfahren (500) zur Durchführung des Starts der hierarchischen mobilen Anwendung nach Anspruch 2, wobei:
die mindestens zwei Smart-Home-Vorrichtungen (230) verschiedenen Kategorien (220) von Smart-Home-Vorrichtungen (230) angehören; und
die aus der Mehrzahl von Erststart-Benutzeroberflächen ausgewählte Erststart-Benutzeroberfläche (550) auf den mindestens zwei Smart-Home-Vorrichtungen (230) basiert, die verschiedenen Kategorien (220) von Smart-Home-Vorrichtungen (230) angehören, die auf der Benutzeroberflächenhierarchie (200A, 200B) basieren; und
wobei ein Statuskartenelement für jede Kategorie (220) der verschiedenen Kategorien (220) von Smart-Home-Vorrichtungen (230) als Teil der Erststart-Benutzeroberfläche dargestellt wird; und
für jedes Statuskartenelement ein aktueller Status der entsprechenden Kategorie (220) von Smart-Home-Vorrichtungen (230) dargestellt wird.

4. Verfahren (500) zur Durchführung des Starts der hierarchischen mobilen Anwendung nach Anspruch 2, wobei:
die mindestens zwei Smart-Home-Vorrichtungen (230) derselben Kategorie (220) von Smart-Home-Vorrichtungen (230) angehören; und
die aus der Mehrzahl von Erststart-Benutzeroberflächen ausgewählte Erststart-Benutzeroberfläche eine Erststart-Benutzeroberfläche der mittleren Ebene ist, die auf den mindestens zwei Smart-Home-Vorrichtungen (230) basiert, die allesamt derselben Kategorie (220) von Smart-Home-Vorrichtungen (230) angehören.

5. Verfahren (500) zur Durchführung des Starts der hierarchischen mobilen Anwendung nach Anspruch 2, wobei:
die mindestens zwei Smart-Home-Vorrichtungen (230) verschiedenen Arten (235) von Smart-Home-Vorrichtungen (230) angehören, aber derselben Kategorie (220) von Smart-Home-Vorrichtungen (230) angehören; und
die aus der Mehrzahl von Erststart-Benutzeroberflächen ausgewählte Erststart-Benutzeroberfläche eine Erststart-Benutzeroberfläche der mittleren Ebene ist, die auf den mindestens zwei Smart-Home-Vorrichtungen (230) basiert, die derselben Kategorie (220) von Smart-Home-Vorrichtungen (230), aber verschiedenen Arten (235) von Smart-Home-Vorrichtungen (230) angehören.

6. Verfahren (500) zur Durchführung des Starts der hierarchischen mobilen Anwendung nach Anspruch 1, wobei die eine oder die mehreren Smart-Home-Vorrichtungen (230) nur eine einzige Smart-Home-Vorrichtung (230) umfassen; und
wobei die aus der Mehrzahl von Erststart-Benutzeroberflächen ausgewählte Erststart-Benutzeroberfläche eine Erststart-Benutzeroberfläche der untersten Ebene ist, die auf der einzigen Smart-Home-Vorrichtung (230) und der Benutzeroberflächenhierarchie (200A, 200B) basiert; und
wobei die einzige Smart-Home-Vorrichtung (230) eine Videokamera (118) ist und die ausgewählte Startbenutzeroberfläche ein Videofeed auf Vorrichtungsebene ist, der mit der Videokamera (118) aufgenommen wird.

7. Verfahren (500) zur Durchführung des Starts der hierarchischen mobilen Anwendung nach Anspruch 1, wobei es sich bei der einen oder den mehreren Smart-Home-Vorrichtungen (230) um Smart-Home-Vorrichtungen (230) handelt, die aus der Gruppe ausgewählt werden, die aus Folgendem besteht:
einer Videokamera (118);
einem intelligenten Thermostat (102);
einem drahtlosen Netzwerkrouter (160);
einer intelligenten Türklingel (106);
einem intelligenten Gefahrendetektor (104);
einer Smart-Home-Assistant-Vorrichtung (119);
einem intelligenten Lautsprecher;
einer intelligenten Anzeige; und
einem intelligenten Luftreiniger; und/oder
wobei es sich bei der einen oder den mehreren Smart-Home-Vorrichtungen (230) um eine oder mehrere Smart-Home-Vorrichtungen (230) handelt, die innerhalb einer einzigen Struktur (150) installiert sind, wobei eine Struktur (150) ein Haus, eine Kindertagesstätte, ein Bürogebäude, ein Apartment, eine Wohnanlage, eine Garage und/oder ein Mobilheim umfasst.

8. Mobile elektronische Vorrichtung (310), umfassend:
eine elektronische Anzeige (316);
eine drahtlose Netzwerkschnittstelle (312); und
einen oder mehrere Prozessoren (314);
einen Speicher, der kommunikativ mit der elektronischen Anzeige (316), der drahtlosen Netzwerkschnittstelle (312) und dem einen oder den mehreren Prozessoren (314) gekoppelt ist, wobei der Speicher von dem einen oder den mehreren Prozessoren (314) gelesen werden kann und darin gespeicherte prozessorlesbare Anweisungen aufweist, die, wenn sie von dem einen oder den mehreren Prozessoren (314) ausgeführt werden, den einen oder die mehreren Prozessoren (314) zu Folgendem veranlassen:
Empfangen (510) einer oder mehrerer Anforderungen zum Registrieren einer oder mehrerer Smart-Home-Vorrichtungen (230) in Verbindung mit einem Benutzerkonto;
Zuordnen (520) der einen oder der mehreren Smart-Home-Vorrichtungen (230) zu dem Benutzerkonto basierend auf dem Empfangen (510) der einen oder der mehreren Anforderungen;
Empfangen (530) einer Anforderung zum Starten einer Anwendung (320), die dem Benutzerkonto zugeordnet ist;
Analysieren (540) der einen oder der mehreren Smart-Home-Vorrichtungen (230), die bei dem Benutzerkonto registriert sind, und einer Benutzeroberflächenhierarchie (200A, 200B);
basierend auf dem Analysieren (540) der einen oder der mehreren Smart-Home-Vorrichtungen (230), die bei dem Benutzerkonto registriert sind, und der Benutzeroberflächenhierarchie (200A, 200B) Auswählen (550) einer Erststart-Benutzeroberfläche aus einer Mehrzahl von Erststart-Benutzeroberflächen, die von der Anwendung (320) als Reaktion auf das Empfangen (530) der Startanforderung dargestellt werden, wobei eine Startbenutzeroberfläche die erste Benutzeroberfläche ist, mit der der Benutzer interagieren kann und die beim Start der Anwendung dargestellt wird, und wobei:
die Benutzeroberflächenhierarchie mindestens eine Benutzeroberfläche der untersten Ebene, eine Benutzeroberfläche der mittleren Ebene und eine Benutzeroberfläche der obersten Ebene umfasst, wobei eine Benutzeroberfläche der untersten Ebene eine Benutzeroberfläche auf Vorrichtungsebene (203) umfasst,
eine Benutzeroberfläche der mittleren Ebene eine Benutzeroberfläche auf Kategorieebene (202) umfasst und eine Benutzeroberfläche der obersten Ebene eine Benutzeroberfläche auf Startseitenebene (210) umfasst; und
das Auswählen (550) der Erststart-Benutzeroberfläche Auswählen der Erststart-Benutzeroberfläche umfasst, die (a) alle registrierten Smart-Home-Vorrichtungen erfasst und (b), falls mehr als eine Erststart-Benutzeroberfläche die Anforderung (a) erfüllt, darunter, der untersten Ebene entspricht; und
Ausgeben (560) der ausgewählten Erststart-Benutzeroberfläche an die elektronische Anzeige (316).

9. Mobile elektronische Vorrichtung (310) nach Anspruch 8, wobei die prozessorlesbaren Anweisungen in den Speicher der mobilen elektronischen Vorrichtung (310) geladen werden, während die Anwendung (320) über die drahtlose Netzwerkschnittstelle (312) von einem App-Store heruntergeladen wird.

10. Mobile elektronische Vorrichtung (310) nach Anspruch 8, wobei:
die eine oder die mehreren Smart-Home-Vorrichtungen (230) mindestens zwei Smart-Home-Vorrichtungen (230) umfassen;
die mindestens zwei Smart-Home-Vorrichtungen (230) verschiedenen Kategorien (220) von Smart-Home-Vorrichtungen (230) angehören; und
die aus der Mehrzahl von Erststart-Benutzeroberflächen ausgewählte Erststart-Benutzeroberfläche auf den mindestens zwei Smart-Home-Vorrichtungen (230) basiert, die verschiedenen Kategorien (220) von Smart-Home-Vorrichtungen (230) angehören, die auf der Benutzeroberflächenhierarchie (200A, 200B) basieren.

11. Mobile elektronische Vorrichtung (310) nach Anspruch 10, wobei:
ein Statuskartenelement für jede Kategorie (220) der verschiedenen Kategorien (220) von Smart-Home-Vorrichtungen (230) als Teil der Erststart-Benutzeroberfläche dargestellt wird; und
für jedes Statuskartenelement ein aktueller Status der entsprechenden Kategorie (220) von Smart-Home-Vorrichtungen (230) dargestellt wird.

12. Mobile elektronische Vorrichtung (310) nach Anspruch 10, wobei:
die mindestens zwei Smart-Home-Vorrichtungen (230) derselben Kategorie (220) von Smart-Home-Vorrichtungen (230) angehören; und
die aus der Mehrzahl von Erststart-Benutzeroberflächen ausgewählte Erststart-Benutzeroberfläche eine Erststart-Benutzeroberfläche der mittleren Ebene ist, die auf den mindestens zwei Smart-Home-Vorrichtungen (230) basiert, die allesamt derselben Kategorie (220) von Smart-Home-Vorrichtungen (230) angehören.

13. Mobile elektronische Vorrichtung (310) nach Anspruch 10, wobei:
die mindestens zwei Smart-Home-Vorrichtungen (230) verschiedenen Arten (235) von Smart-Home-Vorrichtungen (230) angehören, aber derselben Kategorie (220) von Smart-Home-Vorrichtungen (230) angehören; und
die aus der Mehrzahl von Erststart-Benutzeroberflächen ausgewählte Erststart-Benutzeroberfläche eine Erststart-Benutzeroberfläche der mittleren Ebene ist, die auf den mindestens zwei Smart-Home-Vorrichtungen (230) basiert, die derselben Kategorie (220) von Smart-Home-Vorrichtungen (230), aber verschiedenen Arten (235) von Smart-Home-Vorrichtungen (230) angehören.

14. Mobile elektronische Vorrichtung (310) nach Anspruch 8, wobei:
die eine oder die mehreren Smart-Home-Vorrichtungen (230) eine einzige Smart-Home-Vorrichtung (230) umfassen; und
die aus der Mehrzahl von Erststart-Benutzeroberflächen ausgewählte Erststart-Benutzeroberfläche eine Erststart-Benutzeroberfläche der untersten Ebene ist, die auf der einzigen Smart-Home-Vorrichtung (230) und der Benutzeroberflächenhierarchie (200A, 200B) basiert; und
wobei die einzige Smart-Home-Vorrichtung (230) eine Videokamera (118) ist und die ausgewählte Startbenutzeroberfläche ein Videofeed auf Vorrichtungsebene ist, der mit der Videokamera (118) aufgenommen wird.

15. Nichtflüchtiges prozessorlesbares Medium, umfassend prozessorlesbare Anweisungen, die dazu konfiguriert sind, einen oder mehrere Prozessoren zu Folgendem zu veranlassen:
Empfangen (510) einer oder mehrerer Anforderungen zum Registrieren einer oder mehrerer Smart-Home-Vorrichtungen (230) in Verbindung mit einem Benutzerkonto;
Zuordnen (520) der einen oder der mehreren Smart-Home-Vorrichtungen (230) zu dem Benutzerkonto basierend auf dem Empfangen (510) der einen oder der mehreren Anforderungen;
Empfangen (530) einer Anforderung zum Starten einer Anwendung (320), die dem Benutzerkonto zugeordnet ist;
Analysieren (540) der einen oder der mehreren Smart-Home-Vorrichtungen (230), die bei dem Benutzerkonto registriert sind, und einer Benutzeroberflächenhierarchie (200A, 200B) durch die Anwendung (320);
basierend auf dem Analysieren (540) der einen oder der mehreren Smart-Home-Vorrichtungen (230), die bei dem Benutzerkonto registriert sind, und der Benutzeroberflächenhierarchie (200A, 200B) Auswählen (550) einer Erststart-Benutzeroberfläche durch die Anwendung (320) aus einer Mehrzahl von Erststart-Benutzeroberflächen, die von der Anwendung (320) als Reaktion auf das Empfangen (530) der Startanforderung dargestellt werden, wobei eine Erststart-Benutzeroberfläche die erste Benutzeroberfläche ist, mit der der Benutzer interagieren kann und die beim Start der Anwendung dargestellt wird, und wobei:
die Benutzeroberflächenhierarchie mindestens eine Benutzeroberfläche der untersten Ebene, eine Benutzeroberfläche der mittleren Ebene und eine Benutzeroberfläche der obersten Ebene umfasst, wobei eine Benutzeroberfläche der untersten Ebene eine Benutzeroberfläche auf Vorrichtungsebene (203) umfasst, eine Benutzeroberfläche der mittleren Ebene eine Benutzeroberfläche auf Kategorieebene (202) umfasst und eine Benutzeroberfläche der obersten Ebene eine Benutzeroberfläche auf Startseitenebene (210) umfasst; und
das Auswählen (550) der Erststart-Benutzeroberfläche durch die Anwendung (320) Auswählen der Erststart-Benutzeroberfläche umfasst, die (a) alle registrierten Smart-Home-Vorrichtungen erfasst und (b), falls mehr als eine Erststart-Benutzeroberfläche die Anforderung (a) erfüllt, darunter, der untersten Ebene entspricht; und
Ausgeben (560) der ausgewählten Erststart-Benutzeroberfläche durch die Anwendung (320) zur Anzeige.

## Revendications

1. Procédé (500) de réalisation d'un lancement hiérarchique d'application mobile, le procédé (500) comprenant :
la réception (510), par un ou plusieurs processeurs (314) d'un dispositif mobile (310), d'une ou de plusieurs demandes d'enregistrement d'un ou de plusieurs dispositifs domestiques intelligents (230) en association avec un compte utilisateur ;
le mappage (520), par les un ou plusieurs processeurs (314), des un ou plusieurs dispositifs domestiques intelligents (230) au compte utilisateur sur la base des une ou plusieurs demandes reçues ;
la réception (530), par une application (320) exécutée par le dispositif mobile (310), d'une demande de lancement, dans lequel l'application (320) exécutée par le dispositif mobile (310) est mappée au compte utilisateur ;
l'analyse (540), par les un ou plusieurs processeurs (314), des un ou plusieurs dispositifs domestiques intelligents (230) enregistrés auprès du compte utilisateur et d'une hiérarchie d'interface utilisateur (200A, 200B) ;
sur la base de l'analyse (540) des un ou plusieurs dispositifs domestiques intelligents (230) enregistrés auprès du compte utilisateur et de la hiérarchie d'interface utilisateur (200A, 200B), la sélection (550), par les un ou plusieurs processeurs (314), d'une interface utilisateur de lancement initial parmi une pluralité d'interfaces utilisateur de lancement initial à présenter par l'application (320) en réponse à la réception (530) de la demande de lancement, dans lequel une interface utilisateur de lancement initial est la première interface utilisateur avec laquelle l'utilisateur peut interagir qui est présentée au lancement de l'application, et dans lequel :
la hiérarchie d'interface utilisateur comprend au moins une interface utilisateur de niveau inférieur, une interface utilisateur de niveau intermédiaire et une interface utilisateur de niveau supérieur, dans lequel une interface utilisateur de niveau inférieur comprend une interface utilisateur au niveau du dispositif (203), une interface utilisateur de niveau intermédiaire comprend une interface utilisateur au niveau de la catégorie (202) et une interface utilisateur de niveau supérieur comprend une interface utilisateur au niveau du domicile (210) ; et
la sélection (550), par les un ou plusieurs processeurs (314), de l'interface utilisateur de lancement initial comprend la sélection de l'interface utilisateur de lancement initial qui (a) capture tous les dispositifs domestiques intelligents enregistrés et, (b) si plus d'une interface utilisateur de lancement initial satisfait à l'exigence (a), parmi celles-ci, correspond au niveau le plus bas ; et
la fourniture (560), par l'application (320) exécutée par le dispositif mobile (310), de l'interface utilisateur de lancement initial sélectionnée.

2. Procédé (500) de réalisation d'un lancement hiérarchique d'application mobile selon la revendication 1, dans lequel les un ou plusieurs dispositifs domestiques intelligents (230) comprennent au moins deux dispositifs domestiques intelligents (230).

3. Procédé (500) de réalisation d'un lancement hiérarchique d'application mobile selon la revendication 2, dans lequel :
les au moins deux dispositifs domestiques intelligents (230) sont de catégories différentes (220) de dispositifs domestiques intelligents (230) ; et
l'interface utilisateur de lancement initial sélectionnée (550) parmi la pluralité d'interfaces utilisateur de lancement initial est sur la base des au moins deux dispositifs domestiques intelligents (230) étant de catégories différentes (220) de dispositifs domestiques intelligents (230) sur la base de la hiérarchie d'interface utilisateur (200A, 200B) ; et
dans lequel un élément de carte d'état est présenté pour chaque catégorie (220) des catégories différentes (220) de dispositifs domestiques intelligents (230) en tant que partie de l'interface utilisateur de lancement initial ; et
pour chaque élément de carte d'état, un état actuel de la catégorie correspondante (220) de dispositifs domestiques intelligents (230) est présenté.

4. Procédé (500) de réalisation d'un lancement hiérarchique d'application mobile selon la revendication 2, dans lequel :
les au moins deux dispositifs domestiques intelligents (230) sont d'une même catégorie (220) de dispositif domestique intelligent (230) ; et
l'interface utilisateur de lancement initial sélectionnée parmi la pluralité d'interfaces utilisateur de lancement initial est une interface utilisateur de lancement initial de niveau intermédiaire sur la base des au moins deux dispositifs domestiques intelligents (230) étant tous de la même catégorie (220) de dispositif domestique intelligent (230).

5. Procédé (500) de réalisation d'un lancement hiérarchique d'application mobile selon la revendication 2, dans lequel :
les au moins deux dispositifs domestiques intelligents (230) sont d'un type différent (235) de dispositif domestique intelligent (230), mais sont d'une même catégorie (220) de dispositif domestique intelligent (230) ; et
l'interface utilisateur de lancement initial sélectionnée parmi la pluralité d'interfaces utilisateur de lancement initial est une interface utilisateur de lancement initial de niveau intermédiaire sur la base des au moins deux dispositifs domestiques intelligents (230) étant de la même catégorie (220) de dispositif domestique intelligent (230) mais de types différents (235) de dispositif domestique intelligent (230).

6. Procédé (500) de réalisation d'un lancement hiérarchique d'application mobile selon la revendication 1, dans lequel les un ou plusieurs dispositifs domestiques intelligents (230) comprennent seulement un dispositif domestique intelligent unique (230) ; et
dans lequel l'interface utilisateur de lancement initial sélectionnée parmi la pluralité d'interfaces utilisateur de lancement initial est une interface utilisateur de lancement initial de niveau inférieur sur la base du dispositif domestique intelligent unique (230) et de la hiérarchie d'interface utilisateur (200A, 200B) ; et
dans lequel le dispositif domestique intelligent unique (230) est une caméra vidéo (118) et l'interface utilisateur de lancement sélectionnée est un flux vidéo au niveau du dispositif qui est capturé à l'aide de la caméra vidéo (118).

7. Procédé (500) de réalisation d'un lancement hiérarchique d'application mobile selon la revendication 1, dans lequel les un ou plusieurs dispositifs domestiques intelligents (230) sont des dispositifs domestiques intelligents (230) sélectionnés parmi le groupe constitué des éléments suivants :
une caméra vidéo (118) ;
un thermostat intelligent (102) ;
un routeur de réseau sans fil (160) ;
une sonnette intelligente (106) ;
un détecteur de danger intelligent (104) ;
un dispositif d'assistant domestique intelligent (119) ;
un haut-parleur intelligent ;
un écran intelligent ; et
un purificateur d'air intelligent ; et/ou
dans lequel les un ou plusieurs dispositifs domestiques intelligents (230) sont un ou plusieurs dispositifs domestiques intelligents (230) installés à l'intérieur d'une structure unique (150), dans lequel une structure (150) comprend une maison, une garderie, un immeuble de bureaux, un appartement, un condominium, un garage et/ou un mobil-home.

8. Dispositif électronique mobile (310), comprenant :
un affichage électronique (316) ;
une interface réseau sans fil (312) ; et
un ou plusieurs processeurs (314) ;
une mémoire couplée en communication à l'affichage électronique (316), à l'interface réseau sans fil (312) et aux un ou plusieurs processeurs (314), la mémoire étant lisible par les un ou plusieurs processeurs (314) et contenant des instructions lisibles par processeur qui, lorsqu'elles sont exécutées par les un ou plusieurs processeurs (314), amènent les un ou plusieurs processeurs (314) à :
recevoir (510) une ou plusieurs demandes d'enregistrement d'un ou de plusieurs dispositifs domestiques intelligents (230) en association avec un compte utilisateur ;
mapper (520) les un ou plusieurs dispositifs domestiques intelligents (230) au compte utilisateur sur la base de la réception (510) des une ou plusieurs demandes ;
recevoir (530) une demande de lancement d'une application (320) qui est mappée au compte utilisateur ;
analyser (540) les un ou plusieurs dispositifs domestiques intelligents (230) enregistrés auprès du compte utilisateur et une hiérarchie d'interface utilisateur (200A, 200B) ;
sur la base de l'analyse (540) des un ou plusieurs dispositifs domestiques intelligents (230) enregistrés auprès du compte utilisateur et de la hiérarchie d'interface utilisateur (200A, 200B), sélectionner (550) une interface utilisateur de lancement initial parmi une pluralité d'interfaces utilisateur de lancement initial à présenter par l'application (320) en réponse à la réception (530) de la demande de lancement, dans lequel une interface utilisateur de lancement est la première interface utilisateur avec laquelle l'utilisateur peut interagir qui est présentée au lancement de l'application ; et dans lequel :
la hiérarchie d'interface utilisateur comprend au moins une interface utilisateur de niveau inférieur, une interface utilisateur de niveau intermédiaire et une interface utilisateur de niveau supérieur, dans lequel une interface utilisateur de niveau inférieur comprend une interface utilisateur au niveau du dispositif (203), une interface utilisateur de niveau intermédiaire comprend une interface utilisateur au niveau de la catégorie (202) et une interface utilisateur de niveau supérieur comprend une interface utilisateur au niveau du domicile (210) ; et
sélectionner (550) l'interface utilisateur de lancement initial comprend la sélection de l'interface utilisateur de lancement initial qui (a) capture tous les dispositifs domestiques intelligents enregistrés et, (b) si plus d'une interface utilisateur de lancement initial satisfait à l'exigence (a), parmi celles-ci, correspond au niveau le plus bas ; et
fournir(560), à l'affichage électronique (316), l'interface utilisateur de lancement initial sélectionnée.

9. Dispositif électronique mobile (310) selon la revendication 8, dans lequel les instructions lisibles par processeur sont chargées dans la mémoire du dispositif électronique mobile (310) lorsque l'application (320) est téléchargée à partir d'un magasin d'applications via l'interface réseau sans fil (312).

10. Dispositif électronique mobile (310) selon la revendication 8, dans lequel :
les un ou plusieurs dispositifs domestiques intelligents (230) comprennent au moins deux dispositifs domestiques intelligents (230) ;
les au moins deux dispositifs domestiques intelligents (230) sont de catégories différentes (220) de dispositifs domestiques intelligents (230) ; et
l'interface utilisateur de lancement initial sélectionnée parmi la pluralité d'interfaces utilisateur de lancement initial est sur la base des au moins deux dispositifs domestiques intelligents (230) étant de catégories différentes (220) de dispositifs domestiques intelligents (230) sur la base de la hiérarchie d'interface utilisateur (200A, 200B).

11. Dispositif électronique mobile (310) selon la revendication 10, dans lequel :
un élément de carte d'état est présenté pour chaque catégorie (220) des catégories différentes (220) de dispositifs domestiques intelligents (230) en tant que partie de l'interface utilisateur de lancement initial ; et
pour chaque élément de carte d'état, un état actuel de la catégorie correspondante (220) de dispositifs domestiques intelligents (230) est présenté.

12. Dispositif électronique mobile (310) selon la revendication 10, dans lequel :
les au moins deux dispositifs domestiques intelligents (230) sont d'une même catégorie (220) de dispositif domestique intelligent (230) ; et
l'interface utilisateur de lancement initial sélectionnée parmi la pluralité d'interfaces utilisateur de lancement initial est une interface utilisateur de lancement initial de niveau intermédiaire sur la base des au moins deux dispositifs domestiques intelligents (230) étant tous de la même catégorie (220) de dispositif domestique intelligent (230).

13. Dispositif électronique mobile (310) selon la revendication 10, dans lequel :
les au moins deux dispositifs domestiques intelligents (230) sont d'un type différent (235) de dispositif domestique intelligent (230), mais sont d'une même catégorie (220) de dispositif domestique intelligent (230) ; et
l'interface utilisateur de lancement initial sélectionnée parmi la pluralité d'interfaces utilisateur de lancement initial est une interface utilisateur de lancement initial de niveau intermédiaire sur la base des au moins deux dispositifs domestiques intelligents (230) étant de la même catégorie (220) de dispositif domestique intelligent (230) mais de types différents (235) de dispositif domestique intelligent (230).

14. Dispositif électronique mobile (310) selon la revendication 8, dans lequel :
les un ou plusieurs dispositifs domestiques intelligents (230) comprennent un dispositif domestique intelligent unique (230) ; et
l'interface utilisateur de lancement initial sélectionnée parmi la pluralité d'interfaces utilisateur de lancement initial est une interface utilisateur de lancement initial de niveau inférieur sur la base du dispositif domestique intelligent unique (230) et de la hiérarchie d'interface utilisateur (200A, 200B) ; et
dans lequel le dispositif domestique intelligent unique (230) est une caméra vidéo (118) et l'interface utilisateur de lancement sélectionnée est un flux vidéo au niveau du dispositif qui est capturé à l'aide de la caméra vidéo (118).

15. Support non transitoire lisible par processeur, comprenant des instructions lisibles par processeur configurées pour amener un ou plusieurs processeurs à :
recevoir (510) une ou plusieurs demandes d'enregistrement d'un ou de plusieurs dispositifs domestiques intelligents (230) en association avec un compte utilisateur ;
mapper (520) les un ou plusieurs dispositifs domestiques intelligents (230) au compte utilisateur sur la base de la réception (510) des une ou plusieurs demandes ;
recevoir (530) une demande de lancement d'une application (320) qui est mappée au compte utilisateur ;
analyser (540) les un ou plusieurs dispositifs domestiques intelligents (230) enregistrés auprès du compte utilisateur et une hiérarchie d'interface utilisateur (200A, 200B) par l'application (320) ;
sur la base de l'analyse (540) des un ou plusieurs dispositifs domestiques intelligents (230) enregistrés auprès du compte utilisateur et de la hiérarchie d'interface utilisateur (200A, 200B), sélectionner (550), par l'application (320), une interface utilisateur de lancement initial parmi une pluralité d'interfaces utilisateur de lancement initial à présenter par l'application (320) en réponse à la réception (530) de la demande de lancement, dans lequel une interface utilisateur de lancement initial est la première interface utilisateur avec laquelle l'utilisateur peut interagir qui est présentée au lancement de l'application ; et dans lequel :
la hiérarchie d'interface utilisateur comprend au moins une interface utilisateur de niveau inférieur, une interface utilisateur de niveau intermédiaire et une interface utilisateur de niveau supérieur, dans lequel une interface utilisateur de niveau inférieur comprend une interface utilisateur au niveau du dispositif (203), une interface utilisateur de niveau intermédiaire comprend une interface utilisateur au niveau de la catégorie (202) et une interface utilisateur de niveau supérieur comprend une interface utilisateur au niveau du domicile (210) ; et
sélectionner (550), par l'application (320), l'interface utilisateur de lancement initial comprend la sélection de l'interface utilisateur de lancement initial qui (a) capture tous les dispositifs domestiques intelligents enregistrés et, (b) si plus d'une interface utilisateur de lancement initial satisfait à l'exigence (a), parmi celles-ci, correspond au niveau le plus bas ; et
fournir (560), par l'application (320), l'interface utilisateur de lancement initial sélectionnée pour l'affichage.
